# EUROPÄISCHE PATENTSCHRIFT

(11) **EP 2 431 617 B1**
(45) Veröffentlichungstag und Bekanntmachung des Hinweises auf die Patenterteilung: **17.04.2013**
(21) Anmeldenummer: 11181067.7
(22) Anmeldetag: 13.09.2011
(51) Int. Cl.: F16B 5/00, F24J 2/52, H01L 31/042

(54) **Montagesystem zur Festlegung von plattenförmigen Flächenelementen**
Assembly system for fixing board-shaped area elements
Système de montage pour la fixation d'éléments de surface en forme de plaques

(30) Priorität: 17.09.2010 DE 202010008570 U
(43) Veröffentlichungstag der Anmeldung: 21.03.2012
(73) Patentinhaber: SCHÜCO International KG, 33609 Bielefeld (DE)
(72) Erfinder: Fritze, Frank, 33609 Bielefeld (DE)
(74) Vertreter: Dantz, Jan Henning

(56) Entgegenhaltungen:
- EP-A1- 1 892 770
- DE-U1- 9 107 135
- DE-U1- 9 309 284

## Beschreibung

Die vorliegende Erfindung betrifft ein Montagesystem nach dem Oberbegriff des Anspruches 1.

Die DE 93 09 284 offenbart eine Vorrichtung zur lösbaren Halterung plattenförmiger Elemente an Randabschnitten, die in U-förmige Profile eingefügt sind. An den U-förmigen Profilen sind Ausnehmungen vorgesehen, durch die Halteorgane zwischen den Stegen des U-Profils und dem Rand des plattenförmigen Elementes eingeschoben werden, damit die plattenförmigen Elemente gesichert werden.

Es ist bekannt, dass Flächenelemente, wie Glasscheiben oder Photovoltaikmodule, werkzeuglos befestigt werden können, wenn die jeweiligen Flächenelemente zunächst an einer Seite in eine U-förmige Aufnahme eines Profils eingeschoben werden, dann verschwenkt werden und an einer gegenüberliegenden Seite in eine U-förmige Aufnahme eines weiteren Profils eingefügt werden. Dann ist das Flächenelement an gegenüberliegenden Seiten randseitig jeweils in einer U-förmigen Aufnahme gehalten und kann dort zwischen Dichtungen festgelegt werden. Die Auflagedichtung kann dabei vormontiert werden, während die zweite Dichtung nach dem Einlegen des Flächenelementes meist als Steckkederdichtung eingedrückt wird. Die so montierten Flächenelemente werden meist durch Befestigungsmittel in einer vorbestimmten Position fixiert, damit sich diese nicht innerhalb der Profile bewegen, beispielsweise durch Dilatation oder andere äußere Krafteinflüsse. Nachteilig bei diesem Montagesystem für Flächenelemente ist, dass die Befestigungsmittel von außen zugänglich sind und nach deren Entfernung ein Klauen der Flächenelemente möglich ist. Gerade bei Montagesystemen mit Photovoltaikmodulen sind diese nur unzureichend gesichert.

Es ist daher Aufgabe der vorliegenden Erfindung, ein Montagesystem zur Festlegung von plattenförmigen Flächenelementen zu schaffen, das eine leichte Montage ermöglicht und einen Schutz gegen Diebstahl bereitstellt.

Diese Aufgabe wird mit einem Montagesystem mit den Merkmalen des Anspruches 1 gelöst.

Erfindungsgemäß ist bei dem Montagesystem ein plattenförmiges Flächenelement zumindest an einer Seite an einem U-förmigen Abschnitt gehalten, an dem ein Sicherungsbolzen vorgesehen ist, der eine Bewegung des Flächenelementes zum Boden des U-förmigen Abschnittes begrenzt, um eine Demontage zu verhindern, wobei der Sicherungsbolzen eine Sollbruchstelle aufweist und nur durch Zerstörung der Sollbruchstelle demontierbar ist. Dadurch wird eine zerstörungsfreie Demontage des Flächenelementes verhindert, so dass von außen nicht sichtbar ist, wie ein Flächenelement demontiert werden kann. Ohne Kenntnis des Aufbaus des Montagesystems kann daher das Flächenelement nicht aus den U-förmigen Abschnitten der Profile entfernt werden.

Für eine einfache Montage des mindestens einen Sicherungsbolzens ist dieser in eine Öffnung in einer Wand des Profils auf der ersten Seite eingesteckt. Vorzugsweise ist der Sicherungsbolzen an dem Boden des U-förmigen Abschnittes fixiert, so dass er geschützt angeordnet ist und zudem von außen nicht sichtbar ist. Dies erschwert eine Zerstörung des Sicherungsbolzens, der sich innerhalb des Profils befindet. Die Sollbruchstelle kann dabei im Bereich der Wand des Profils angeordnet sein, also beispielsweise im Boden des U-förmigen Abschnittes, so dass bei einer Zerstörung des Sicherungsbolzens zumindest der abgebrochene Teil in den U-förmigen Abschnitt herabfällt, damit der Bereich zum Boden des U-förmigen Abschnittes zum Verschieben des Flächenelementes freigegeben wird.

Gemäß einer weiteren Ausgestaltung der Erfindung weist der Sicherungsbolzen einen Kopfabschnitt auf, der auf der gegenüberliegenden Seite des U-förmigen Abschnittes hervorsteht. Der Kopfabschnitt kann insbesondere in einem zweiten U-förmigen Abschnitt angeordnet sein und einen Anschlag für ein benachbartes Flächenelement ausbilden. Das Profil weist dann zwei benachbarte U-förmige Abschnitte auf und besitzt in diesem Bereich eine H-förmige Kontur. Dadurch ist es möglich, einen Kopfabschnitt des Sicherungsbolzens in dem zweiten U-förmigen Abschnitt anzuordnen, damit dieser dann einen Anschlag für ein benachbartes Flächenelement ausbildet. Auf diese Weise können eine Vielzahl von Flächenelementen hintereinander montiert werden, wobei zwischen zwei Flächenelementen mindestens ein Sicherungsbolzen angeordnet ist.

Die Flächenelemente sind vorzugsweise mit Spiel zwischen einem Kopf eines Sicherungsbolzens und einem Einsteckabschnitt eines an der gegenüberliegenden Seite angeordneten Sicherungsbolzens gehalten. Dadurch kann auch bei Wärmeausdehnungen oder bei einer Relativbewegung des Flächenelementes zu dem Profil ein gewisser Toleranzausgleich vorgenommen werden. Zudem wird ein Kontakt des Flächenelementes mit Metall vermieden, wenn der Sicherungsbolzen zumindest an der Oberfläche des Kopfabschnittes und des Einsteckabschnittes beschichtet ist oder aus Kunststoff hergestellt ist. Das Flächenelement kann dabei eine rechteckige Kontur aufweisen und an gegenüberliegenden Seiten durch mehrere Sicherungsbolzen positioniert gehalten werden.

Gemäß einer bevorzugten Ausgestaltung ist das Flächenelement randseitig zwischen zwei Dichtungen zwischen den Profilen eingefasst, die an den Schenkeln der U-förmigen Abschnitte abgestützt sind. Eine Dichtung kann dabei als Kederdichtung eingesteckt sein.

Die Profile mit den U-förmigen Abschnitten können ferner einen integral ausgebildeten Ausleger aufweisen, der an einer Tragkonstruktion festgelegt wird. Das Montagesystem eignet sich insbesondere für Photovoltaikmodule, aber auch Isolierglasscheiben an Fassaden oder Lichtdächern können auf dieser Art befestigt werden.

Die Erfindung wird nachfolgend anhand eines Ausführungsbeispiels mit Bezug auf die beigefügten Zeichnungen näher erläutert. Es zeigen.

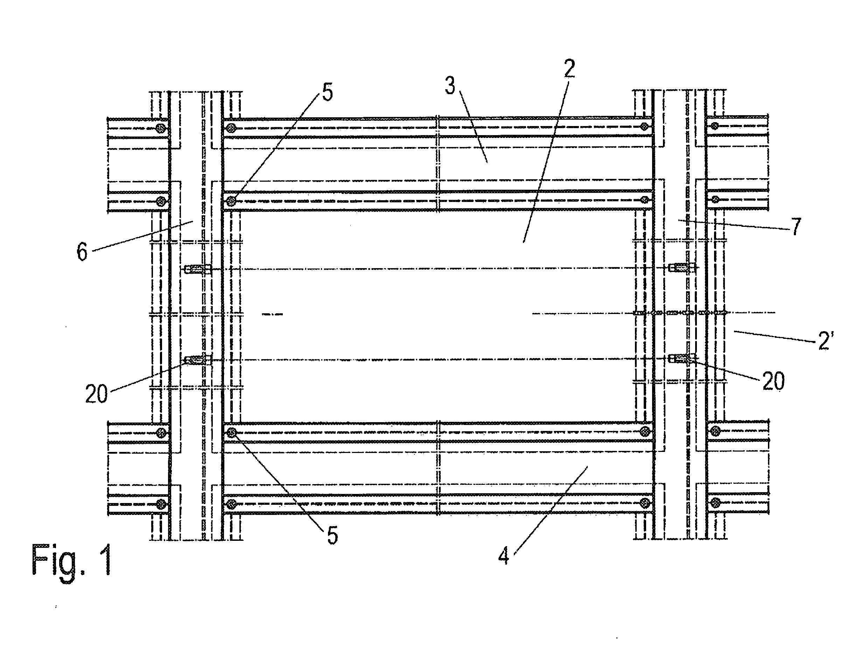

- Figur 1: eine Draufsicht auf ein Ausführungsbeispiel eines erfin-dungsgemäßen Montagesystems mit einem Flächenele-ment;
- Figur 2: eine Schnittansicht eines Profils zur Montage des Flä-chenelements;
- Figuren 3A bis 3C: mehrere Ansichten des Montagesystems im Bereich ei-nes Profils bei der Montage eines Flächenelementes, und
- Figuren 4A bis 4C: mehrere Ansichten eines Sicherungsbolzens für das Montagesystem.

Ein Montagesystem 1 zur Festlegung von plattenförmigen Flächenelementen 2, insbesondere Photovoltaikmodulen oder Isolierglasscheiben, umfasst ein erstes und ein zweites Abdeckprofil 3 und 4, die über Schrauben 5 fixiert sind. Die Abdeckprofile 3 und 4 an den Längsseiten des Flächenelementes 2 können dadurch auf einfache Weise demontiert werden.

Die Festlegung des Flächenelementes 2 erfolgt an gegenüberliegenden Stirnseiten, durch ein Profil 6 und ein Profil 7, die baugleich ausgebildet sind und das Flächenelement 2 randseitig durch einen U-förmigen Abschnitt einfassen. Zur Positionierung des Flächenelementes 2 sind Sicherungsbolzen 20 an den Profilen 6 und 7 festgelegt.

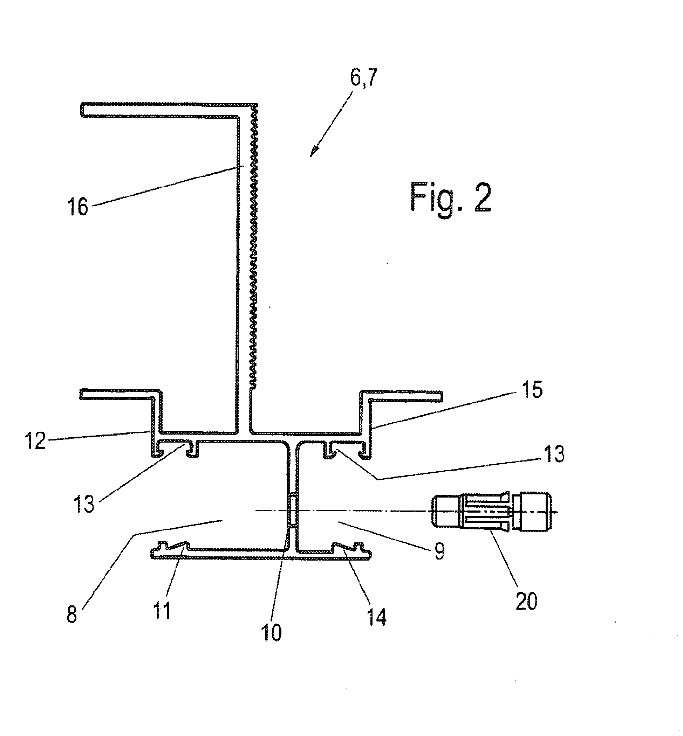

In Figur 2 ist der Querschnitt der Profile 6 und 7 im Detail gezeigt. Die Profile 6 und 7 weisen jeweils einen U-förmigen Abschnitt 8 an einer ersten Seite und einen U-förmigen Abschnitt 9 an einer gegenüberliegenden zweiten Seite auf, so dass ein H gebildet wird. Das Flächenelement 2 ist in den U-förmigen Abschnitt 9 bei dem Profil 6 und in den U-förmigen Abschnitt 8 bei dem Profil 7 eingefügt. Ein benachbartes Flächenelement 2' ist bei dem Profil 7 in den U-förmigen Abschnitt 9 eingefügt.

Der U-förmige Abschnitt 8 ist durch einen ersten Schenkel 11 und einen zweiten Schenkel 12 gebildet, wobei an dem Schenkel 12 eine Nut 13 zum Einfügen einer Anlagedichtung vorgesehen ist. An dem Schenkel 11 ist ebenfalls eine Profilierung ausgebildet, die zur Montage einer Steckkederdichtung dient. Dadurch kann das Flächenelement 2 an dem U-förmigen Abschnitt 8 randseitig zwischen zwei Dichtungen eingeklemmt werden.

An dem U-förmigen Abschnitt 9 ist ebenfalls ein erster Schenkel 14 und ein zweiter Schenkel 15 ausgebildet, wobei an dem unteren Schenkel 15 eine Nut 13 für eine Dichtung vorgesehen ist und der Schenkel 14 und eine Profilierung für eine Steckkederdichtung aufweist. Die beiden U-förmigen Abschnitte 8 und 9 sind durch einen Boden 10 voneinander getrennt, der eine Öffnung zum Einstecken eines Sicherungsbolzens 20 aufweist.

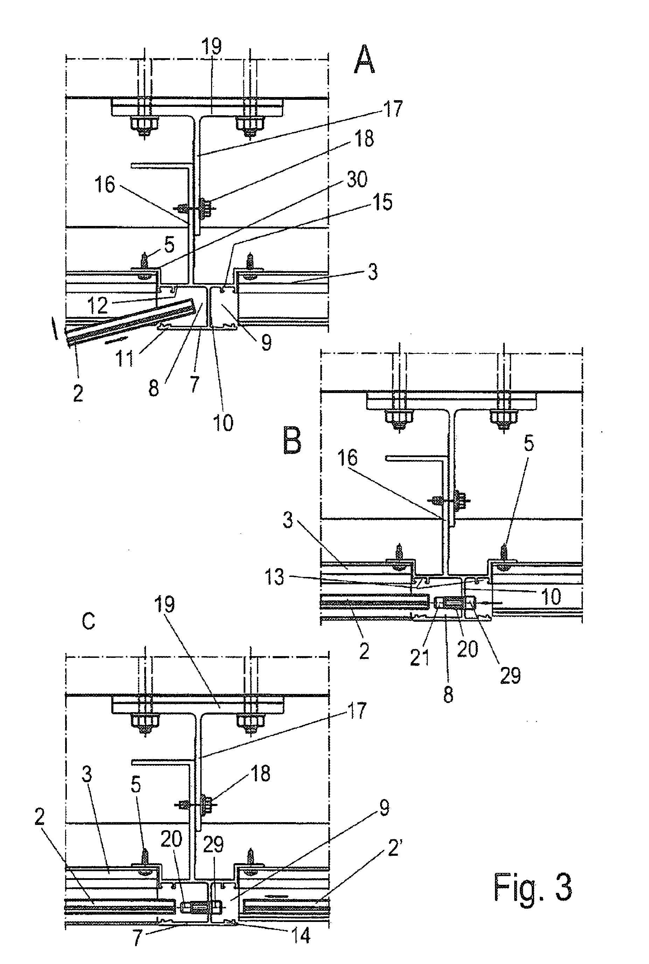

Die Montage der Flächenelemente wird mit Bezug auf die Figuren 3A bis 3C erläutert.

Zunächst wird ein Profil 7 über einen integral ausgebildeten Ausleger 16 an einer Tragkonstruktion 19, beispielsweise einem T-Profil, montiert. Hierfür wird der Ausleger 16 über eine Schraubverbindung 18 an einem Steg 17 der Tragkonstruktion 19 in der gewünschten Position ausgerichtet und festgelegt. Ferner werden die Abdeckprofile 3 und 4 an einem Ausleger 30 an dem Schenkel 12 und 15 fixiert.

Ein Flächenelement 2 wird zunächst in einen U-förmigen Abschnitt 8 eingeschoben (Figur 3A), bis eine Stirnseite des Flächenelementes 2 nahe dem Boden 10 angeordnet ist. In dieser Position kann das Flächenelement 2 verschwenkt werden und kann benachbart zu dem Schenkel 14 an dem U-förmigen Abschnitt 9 bewegt werden. Dann kann das Flächenelement 2 weg von dem Boden 10 an dem U-förmigen Abschnitt 8 zurückgeschoben werden, so dass bei dem Flächenelement 2 die gegenüberliegenden Randseiten jeweils in einen U-förmigen Abschnitt 8 bzw. 9 eingefügt sind. Das Flächenelement 2 liegt nun an den Anlagedichtungen in den Nuten 13 an und kann über Steckkederdichtungen festgelegt werden, die an den Schenkeln 11 und 14 montiert werden.

Um das Flächenelement 2 in seiner Position zu sichern und gegen Diebstahl zu schützen, wird ein Sicherungsbolzen 20 in eine Öffnung in dem Boden 10 eingesteckt. Der Bolzen 20 weist einen vorderen Einsteckabschnitt 21 auf, der benachbart zu einer Stirnseite des Flächenelements 2 angeordnet ist, so dass das Flächenelement 2 mit geringfügigem Spiel angeordnet wird. Wenn der Sicherungsbolzen 20 an dem Boden 10 verrastet, liegt ein Kopfabschnitt 29 in dem U-förmigen Abschnitt 9.

Wie in Figur 3C gezeigt ist, kann nach der Montage des Sicherungsbolzens 20 an dem Profil 7 ein benachbartes Flächenelement 2' montiert werden, das auf der gegenüberliegenden Seite bereits in einen U-förmigen Abschnitt 8 bis zum Boden 10 eingeschoben ist und dort an dem Schenkel 14 des Profils 7 vorbeigeschwenkt werden kann. Anschließend wird das Flächenelement 2' in den U-förmigen Abschnitt 9 eingeschoben, wobei der Kopfabschnitt 29 des Sicherungsbolzens 20 als Anschlag dient. Dadurch lassen sich eine Vielzahl von Flächenelementen 2 bzw. 2' in einer Reihe montieren.

Die Flächenelemente 2 sind dabei an gegenüberliegenden Seiten jeweils über mindestens 2 Sicherungsbolzen 20 mit Spiel positioniert.

Für eine Demontage des Flächenelementes 2 wird die Dichtung an dem Schenkel 11 entfernt und ein hakenförmiges Spezialwerkzeug in den u-förmigen Abschnitt eingefügt, das dann in Längsrichtung des Profils 7 bewegt wird, um den Einsteckabschnitt 21 abzubrechen. Der Benutzer sieht allerdings nicht, wo die Sicherungsbolzen 20 angeordnet sind und muss daher das Spezialwerkzeug entlang dem Profil 7 bewegen. Wenn die Sicherungsbolzen 20 an den Einsteckabschnitten 21 abgebrochen sind, fallen diese nach unten zu dem Schenkel 12, so dass das Flächenelement 2 zu dem Boden 10 verschoben werden kann und dann auf der gegenüberliegenden Seite aus dem u-förmigen Abschnitt 9 herausgezogen wird. Für einen erneuten Einbau eines Flächenelementes 2 muss dann ein anderer Abstandshalter montiert werden, der eine Bewegung des Flächenelementes relativ zu dem Profil 7 verhindert.

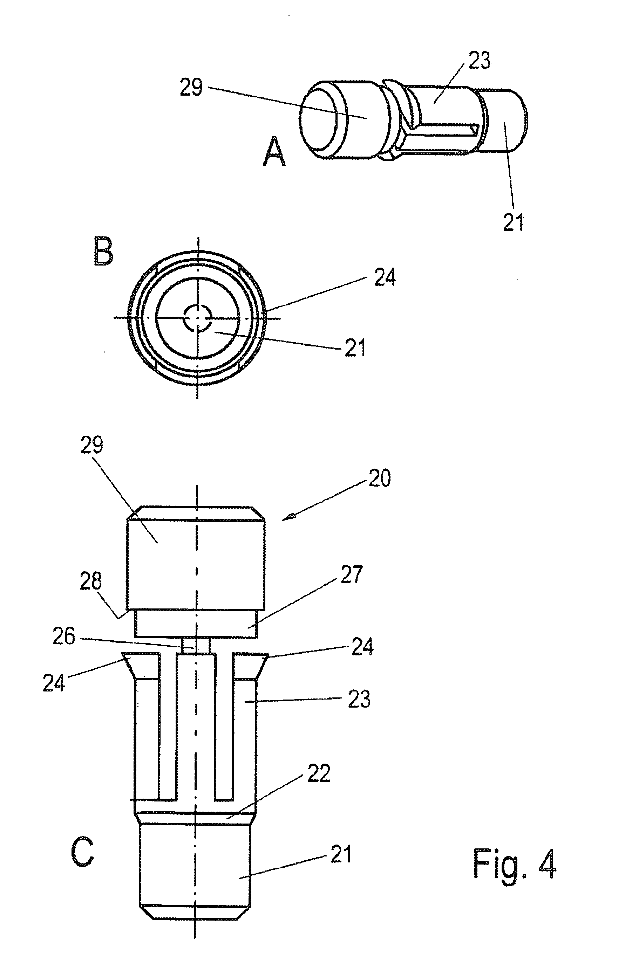

In den Figuren 4A bis 4C ist der Sicherungsbolzen 20 im Detail gezeigt. Der Sicherungsbolzen 20 ist im Wesentlichen zylindrisch ausgebildet und umfasst einen vorderen Einsteckabschnitt 21, der einen geringeren Durchmesser aufweist als eine Öffnung in dem Boden 10, damit das Einstecken erleichtert wird. Der Einsteckabschnitt 21 weitet sich an einem Übergang 22 auf, an dem sich mehrere Federstege 23 anschließen, die durch Schlitze freistehend ausgebildet sind. Am Ende der Federstege 23 ist ein nach außen aufgeweiteter Abschnitt mit einer Anlaufschräge 24 ausgebildet. Dadurch kann beim Einstecken des Sicherungsbolzens 20 ein Federsteg 23 jeweils nach innen zu dem Schlitz gedrückt werden, wenn der Bereich der Anlaufschräge 24 die Wände der Öffnung in dem Boden 10 berührt.

Der Sicherungsbolzen 20 weist ferner eine Sollbruchstelle 26 auf, die als Brücke zu einem Kopfabschnitt 29 ausgebildet ist und nur einen geringen Durchmesser aufweist, der mehr als das Dreifache kleiner ist als der Durchmesser des Kopfabschnittes 29. An dem Kopfabschnitt 29 ist ein zylindrischer Halteabschnitt 27 ausgebildet, an dem die Sollbruchstelle 26 angeformt ist, wobei der Halteabschnitt 27 in die Öffnung der Wand 10 einsteckbar ist. Dadurch ist der Sicherungsbolzen 20 an dem Boden 10 in der gewünschten Position gehalten. An den Halteabschnitt 27 schließt sich eine radial nach außen gerichtete Stufe 28 an, die einen Anschlag bildet und an dem Boden 10 anliegt, so dass bei einem Andrücken eines Flächenelementes 2' gegen den Sicherungsbolzen 20 dieser als Anschlag wirkt.

Der Sicherungsbolzen 20 ist einstückig aus Kunststoff hergestellt, so dass eine Elastizität der Federstege 23 bereitgestellt wird und zudem ein Kontakt von Metall an den Flächenelementes 2 bzw. 2' vermieden wird. Es ist auch möglich, den Sicherungsbolzen 20 aus Metall herzustellen und die in Kontakt mit den Flächenelementes 2 bzw. 2' gelangenden Oberflächen mit einem elastischen Material zu beschichten.

## Patentansprüche

1. Montagesystem (1) zur Festlegung von plattenförmigen Flächenelementen (2), insbesondere Photovoltaikmodulen, mit zwei voneinander beabstandeten Profilen (6, 7), die auf der einander zugewandten Seite einen U-förmigen Abschnitt (8, 9) aufweisen und in einem solchen Abstand zueinander fixiert sind, dass das Flächenelement (2) auf einer ersten Seiten in den U-förmigen Abschnitt (8) randseitig eingefügt werden kann, um dann an der gegenüberliegenden zweiten Seite an einem Schenkel (14) des U-förmigen Abschnittes (9) vorbeigeschwenkt und in den U-förmigen Abschnitt (9) an der zweiten Seite eingeschoben zu werden, und dann in der montierten Position an der ersten und der zweiten Seite jeweils randseitig in einen U-förmigen Abschnitt (8, 9) eingefügt ist, wobei zumindest an dem Profil (6) der ersten Seite mindestens ein Sicherungsbolzen (20) vorgesehen ist, mittels dem eine Bewegung des Flächenelementes (2) zum Boden (10) des U-förmigen Abschnittes (8) begrenzt wird, um eine Demontage des Flächenelementes (2) zu verhindern, **dadurch gekennzeichnet, dass** der Sicherungsbolzen (20) eine Sollbruchstelle (26) aufweist und nur durch Zerstörung der Sollbruchstelle (26) demontierbar ist, so dass von außen nicht sichtbar ist, wie das Flächenelement (2) demontiert werden kann.

2. Montagesystem nach Anspruch 1, **dadurch gekennzeichnet, dass** der Sicherungsbolzen (20) in eine Öffnung in einer Wand (10) des Profils (7) auf der ersten Seite eingesteckt ist.

3. Montagesystem nach Anspruch 1 oder 2, **dadurch gekennzeichnet, dass** der Sicherungsbolzen (20) an dem Boden (10) des U-förmigen Abschnittes (8) fixiert ist.

4. Montagesystem nach einem der vorhergehenden Ansprüche, **dadurch gekennzeichnet, dass** der Sicherungsbolzen (20) mindestens einen Federsteg (23) aufweist, der beim Einstecken des Bolzens (20) hinter der Wand verrastet.

5. Montagesystem nach einem der vorhergehenden Ansprüche, **dadurch gekennzeichnet, dass** die Sollbruchstelle (26)im Bereich der Wand (10) des Profils (7) angeordnet ist.

6. Montagesystem nach einem der vorhergehenden Ansprüche, **dadurch gekennzeichnet, dass** der Sicherungsbolzen (20) mit einem Kopfabschnitt (29) auf der gegenüberliegenden Seite des U-förmigen Abschnittes (8) angeordnet ist.

7. Montagesystem nach Anspruch 6, **dadurch gekennzeichnet, dass** der Kopfabschnitt (29) in einem zweiten U-förmigen Abschnitt (9) angeordnet ist und einen Anschlag für ein benachbartes Flächenelement (2') ausbildet.

8. Montagesystem nach einem der vorhergehenden Ansprüche, **dadurch gekennzeichnet, dass** das Flächenelement (2) mit Spiel zwischen einem Kopf (29) eines Sicherungsbolzens (20) und einem Einsteckabschnitt (21) eines an der gegenüberliegenden Seite angeordneten Sicherungsbolzens (20) gehalten ist.

9. Montagesystem nach einem der vorhergehenden Ansprüche, **dadurch gekennzeichnet, dass** an gegenüberliegenden Seiten des Flächenelementes (2) jeweils mehrere Sicherungsbolzen (20) montiert sind.

10. Montagesystem nach einem der vorhergehenden Ansprüche, **dadurch gekennzeichnet, dass** das Flächenelement (2) randseitig zwischen zwei Dichtungen an den Profilen (6, 7) eingefasst ist, die an den Schenkeln (11, 12; 14, 15) der U-förmigen Abschnitte (8, 9) abgestützt sind.

11. Montagesystem nach einem der vorhergehenden Ansprüche, **dadurch gekennzeichnet, dass** der Sicherungsbolzen (20) aus Kunststoff hergestellt ist.

12. Montagesystem nach einem der vorhergehenden Ansprüche, **dadurch gekennzeichnet, dass** integral mit dem Profil (6, 7) ein Ausleger (16) zur Festlegung an einer Tragkonstruktion (19) ausgebildet ist.

## Claims

1. Mounting system (1) for securing panel-like surface-area elements (2), in particular photovoltaic modules, having two spaced-apart profiles (6, 7) which, facing one another, have a U-shaped portion (8, 9) and are fixed at such a spacing apart from one another that the surface-area element (2), on a first side, can be introduced peripherally into the U-shaped portion (8), in order then, on the opposite, second side, to be pivoted past a limb (14) of the U-shaped portion (9) and pushed into the U-shaped portion (9) on the second side, and then, in the mounted position, the surface-area element has been introduced peripherally in each case into a U-shaped portion (8, 9) on the first and the second sides, wherein at least one securing pin (20) is provided at least on the profile (6) on the first side, and this securing pin limits movement of the surface-area element (2) in relation to the base (10) of the U-shaped portion (8) in order to prevent removal of the surface-area element (2), **characterized in that** the securing pin (20) has a predetermined breaking point (26) and can be removed only as a result of the predetermined breaking point (26) being destroyed, and therefore it is not visible from the outside how the surface-area element (2) can be removed.

2. Mounting system according to Claim 1, **characterized in that** the securing pin (20) is plugged into an opening in a wall (10) of the profile (7) on the first side.

3. Mounting system according to Claim 1 or 2, **characterized in that** the securing pin (20) is fixed on the base (10) of the U-shaped portion (8).

4. Mounting system according to one of the preceding claims, **characterized in that** the securing pin (20) has at least one resilient crosspiece (23), which latches behind the wall when the bolt (20) is plugged in.

5. Mounting system according to one of the preceding claims, **characterized in that** the predetermined breaking point (26) is arranged in the region of the wall (10) of the profile (7).

6. Mounting system according to one of the preceding claims, **characterized in that** the securing pin (20) has a head portion (29) arranged on the opposite side of the U-shaped portion (8).

7. Mounting system according to Claim 6, **characterized in that** the head portion (29) is arranged in a second U-shaped portion (9) and forms a stop for an adjacent surface-area element (2').

8. Mounting system according one of the preceding claims, **characterized in that** the surface-area element (2) is retained with play between a head (29) of one securing pin (20) and a plug-in portion (21) of a securing pin (20) arranged on the opposite side.

9. Mounting system according to one of the preceding claims, **characterized in that** in each case a plurality of securing pins (20) are mounted on opposite sides of the surface-area element (2).

10. Mounting system according to one of the preceding claims, **characterized in that** the surface-area element (2) is enclosed peripherally between two seals on the profiles (6, 7), which are supported on the limbs (11, 12; 14, 15) of the U-shaped portions (8, 9).

11. Mounting system according to one of the preceding claims, **characterized in that** the securing pin (20) is produced from plastics material.

12. Mounting system according to one of the preceding claims, **characterized in that** an extension arm (16) for securing on a carrying structure (19) is formed integrally with the profile (6, 7).

## Revendications

1. Système de montage (1) servant à fixer des éléments de surface (2) en forme de plaque, en particulier des modules photovoltaïques, comprenant deux profilés (6, 7) espacés l'un de l'autre, lesquels présentent sur le côté tourné l'un vers l'autre une section en forme de U (8, 9) et qui sont fixés à une telle distance l'un par rapport à l'autre que l'élément de surface (2) peut être inséré côté bord sur un premier côté, dans la section en forme de U (8) pour être alors déplacé par pivotement au niveau d'un deuxième côté opposé le long d'une branche (14) de la section en forme de U (9) et pour être inséré par glissement dans la section en forme de U (9) au niveau du deuxième côté, et en ce que ledit élément de surface est alors inséré dans la position montée, au niveau du premier et du deuxième coté, respectivement côté bord dans une section en forme de U (8, 9), sachant qu'est prévu au moins au niveau du profilé (6) du premier côté au moins un boulon de blocage (20), lequel permet de limiter un mouvement de l'élément de surface (2) en direction du fond (10) de la section en forme de U (8) afin d'empêcher un démontage de l'élément de surface (2), **caractérisé en ce que** le boulon de blocage (20) présente un point destiné à la rupture (26), et **en ce qu'**il ne peut être démonté qu'en détruisant le point destiné à la rupture (26) de sorte qu'on ne peut voir de l'extérieur la manière avec laquelle l'élément de surface (2) peut être démonté.

2. Système de montage selon la revendication 1, **caractérisé en ce que** le boulon de blocage (20) est enfiché dans une ouverture d'une paroi (10) du profilé (7) sur le premier côté.

3. Système de montage selon la revendication 1 ou 2, **caractérisé en ce que** le boulon de blocage (20) est fixé au niveau du fond (10) de la section en forme de U (8).

4. Système de montage selon l'une quelconque des revendications précédentes, **caractérisé en ce que** le boulon de blocage (20) présente au moins une barrette à ressort (23), qui s'enclenche derrière la paroi lors de l'enfichage du boulon (20).

5. Système de montage selon l'une quelconque des revendications précédentes, **caractérisé en ce que** le point destiné à la rupture (26) est disposé dans la zone de la paroi (10) du profilé (7).

6. Système de montage selon l'une quelconque des revendications précédentes, **caractérisé en ce que** le boulon de blocage (20) est disposé par une partie de tête (29) sur le côté opposé de la section en forme de U (8).

7. Système de montage selon la revendication 6, **caractérisé en ce que** la partie de tête (29) est disposée dans une deuxième section en forme de U (9), et **en ce qu'**elle forme une butée pour un élément de surface voisin (2').

8. Système de montage selon l'une quelconque des revendications précédentes, **caractérisé en ce que** l'élément de surface (2) est maintenu avec du jeu entre une tête (29) d'un boulon de blocage (20) et une section d'enfichage (21) d'un boulon de blocage (20) disposé au niveau du côté opposé.

9. Système de montage selon l'une quelconque des revendications précédentes, **caractérisé en ce que** plusieurs boulons de blocage (20) sont montés au niveau des côtés opposés de l'élément de surface (2).

10. Système de montage selon l'une quelconque des revendications précédentes, **caractérisé en ce que** l'élément de surface (2) est encerclé côté bord par deux joints d'étanchéité au niveau des profilés (6, 7), lesquels s'appuient sur les branches (11, 12 ; 14, 15) des sections en forme de U (8, 9).

11. Système de montage selon l'une quelconque des revendications précédentes, **caractérisé en ce que** le boulon de blocage (20) est fabriqué à partir d'une matière plastique.

12. Système de montage selon l'une quelconque des revendications précédentes, **caractérisé en ce qu'**un bras (16) destiné à être fixé au niveau d'une structure porteuse (19) est réalisé intégralement avec le profilé (6, 7).
